# EUROPEAN PATENT SPECIFICATION

(11) **EP 3 170 611 B1**
(45) Date of publication and mention of the grant of the patent: **28.02.2018**
(21) Application number: 15195569.7
(22) Date of filing: 20.11.2015
(51) Int. Cl.: B23K 26/08

(54) **CONTINUOUS WEB LASER TREATMENT MODULE**
ENDLOSBAHNLASERBEHANDLUNGSMODUL
MODULE DE TRAITEMENT LASER D'UNE BANDE CONTINUE

(43) Date of publication of application: 24.05.2017
(73) Proprietor: Comexi Group Industries, S.A.U, 17457 Riudellots de la Selva (Girona) (ES)
(72) Inventor: PRAT GIL, Jordi, 17002 Girona (ES); MATÓ REVERTER, Robert, 17455 Caldes de Malavella (Girona) (ES)
(74) Representative: Juncosa Miro, Jaime

(56) References cited:
- EP-A1- 2 578 403
- EP-A1- 2 881 212
- DE-A1- 10 328 868

## Description

### Background of the invention

The present invention relates to a continuous web laser treatment module, including a web material entrance and a web material exit connected through a web path, being a continuous web material transported along said web path, and said module including laser generators which create laser beams over said web material to burn it, cut it, print it, or to produce any other laser treatment on said web material continuously transported.

### Description of the related art

The laser treatment of a web material transported continuously along a path is already known, for example by document US4302654 or EP1366890.

Also the continuous web laser treatment with a laser generator provided with an automatic galvanometric mirror or lent, which can orientate the laser beam over different regions of the web material continuously transported, producing different laser treatment patterns.

Usually these laser treatment modules provided with galvanometric mirrors produce the laser treatment over a horizontal surface of the web material path, being the laser beam direction descendent, allowing the laser adjustment and the web material inspection from both lateral sides of the continuous web material. In some cases, the laser treatment module include a web entrance and a web exit in a short distance regarding the floor on which the laser treatment module is supported, being said web entrance and said web exit covered with a platform, being therefore the laser treatment module accessible from over the web entrance and the web exit. Example of this embodiment is the invention described on document EP2881212, forming the basis for the preamble of claim 1. These laser treatment modules cannot be used for food packaging because the short distance between the floor and the web material is not permitted to avoid the possibility of contamination of the web material produced by electrostatic attraction of the floor contaminants.

Other problems are produced for the horizontal position of the treatment web path. For example the smoke produced during the laser treatment can contaminate the optic elements of the laser generator reducing their efficiency. Also maintain a constant web material tension is essential to avoid the web material buckling on the treatment horizontal web path in order to prevent a changing distance between the web material and the laser generator.

### Summary of the invention

The present invention is related to a continuous web laser treatment module comprising:
- a web material transported along a web path in a given direction;
- a web material entrance to the laser treatment module;
- a web material exit of the laser treatment module placed downstream from the web material entrance;
- a frame supported on a floor;
- a plurality of rotating rollers, supported on said frame, said rollers defining said web path between the web material entrance and the web material exit, said web path including at least a first flat path section for the web material laser treatment;
- a first group of laser generators positionally adjustable arranged and supported on a first support bridge integrated on said frame;
each laser generator creating a laser beam, and each laser generator being provided with an automatic galvanometric mirror or lent which deflect said laser beam providing an orientable laser beam incident to said first flat path section of the web material.

Said web material can be, as an illustrative and not limitative embodiment, a plastic sheet as for example PVC, Polyethylene, Polypropylene, PET or Polyamide sheet, a paper sheet, an aluminum sheet, a cardboard sheet, or can be also a single layer or a multilayer material made with different materials overlapped, for example PET/aluminium/Polyethylene, or Polyamide/Polyethylene, or Bioriented Polyproplene/Metalized Bioriented Polypropylene

The web material entrance is an aperture, conduct or web path section which conducts the web material from the outside of the laser treatment module to the inside of the laser treatment module, preferably from a previous web treatment module to the laser treatment module. The web material exit is an aperture, conduct, or web path section which conducts the web material from the inside of the laser treatment module to the outside of the laser treatment module, preferably from the laser treatment module to a posterior web treatment module.

The laser treatment module can be connected, via a common web path, with a preceding module and with a posterior module in the web path transport direction. Said previous module will include a web material exit which will be connected with the laser treatment module, feeding its web material entrance. The posterior module will include a web material entrance fed from the laser treatment module web material exit.

Preceding and posterior modules are not part of the present invention.

Optionally between the adjacent modules a web transport bridge will be included, guiding the web material through the distance existing between the preceding module and the laser treatment module and/or between the laser treatment module and the posterior module.

The laser treatment is a treatment of the web material produced through a laser beam, examples of this treatment can be, for example, cutting, burning, drawing, microperforing or welding the web material. Each laser generator include a galvanometric mirror or lent, which can deflect the laser beam produced by the laser generator with high precision and with coordination with the web material transport velocity, according to a predefined pattern programed on a programmable logic controller which control the galvanometric mirror or lent movement.

Each laser generator can produce a laser treatment on a band of the web material, said bands being typically narrower than the web material width, therefore a plurality of laser generators have to be emplaced adjacent to each other to cover all the web material width.

The present invention proposes, in an innovative way, the module further includes following features:
- said web material entrance and/or said web material exit are placed over a maintenance passage accessible for a user;
- said first flat path section is oriented in vertical direction, facing said maintenance passage, being said laser generators accessible from said maintenance passage.

So according the above, the path section is oriented in vertical direction. This position is advantageous for multiple reasons.

The laser treatment of the web material burn it and produce smoke which ascends. Being the path section in vertical position said smoke cannot affect the optical elements, a common problem in other configurations that can reduce the laser efficiency.

Also maintain a constant distance between the web material and the laser generator is important in order to avoid laser defocus problems. Being the web material in horizontal position a buckling effect can be produced under the gravity effect if the web tension is not correct, precise and constant, but being the web material in vertical position the gravity do not produce a buckling effect on the web material, and therefore is easier to assure a constant distance between the web material and the laser generators. Despite this advantage, a web tension control device can be included in the laser treatment module or in the previous or the posterior module, in order to assure a perfect and constant web tension.

The elevated position of the web material entrance and/or of the web material exit, placed overhead a maintenance passage accessible for a user, provides the conditions to isolate the web material from external contamination, allowing the use of the proposed laser treatment module for food packaging manipulation. Even into the laser treatment module the web material is spaced apart from the floor avoiding the risk of contamination of said web material. This feature in combination with the elevated position of the web material entrance and exit allows the proposed laser treatment module to be integrated in a web treatment overhead plant, which is a plant for the food packaging treatment including high standard hygienic measures.

It will be understood that said maintenance passage can be provided under the web material entrance, under the web material exit, or also simultaneously under the web material entrance and the web material exit according an embodiment in which the web material entrance and the web material exit are placed one over the other on the same side of the laser treatment module.

The maintenance passage created under the web material entrance and/or exit, and in front of the first flat path section, permits the access of a user to a position where the laser generators are easily accessible for the user to allow the maintenance and adjustment of said laser generators.

An additional advantage provided by the described configuration is that the web material is always spaced from the floor permitting the use of this laser treatment module for the treatment of a web material destined to be transformed in food packaging.

Additionally it is proposed to include a second group of laser generators positionally adjustable arranged and supported on a second support bridge integrated on said frame and parallel to said first support bridge, being the second group of laser generators placed downstream from the first group of laser generators, in the web material transport direction, creating orientable laser beams incident to a second flat path section of the web path, being said second flat path section downstream from the first flat path section. Both first and second flat path sections can be segments of the same flat path section, or be different flat path sections.

This feature permits to emplace the laser generators of the second group of laser generators centered between two adjacent bands of treated web material treated by the laser generators of the first group of laser generators, providing a better laser treatment of these in-between zones.

According to an alternative or additional embodiment, the laser treatment module includes following features:
- said web material entrance is placed over the maintenance passage;
- said web material exit is placed over an inspection passage accessible for an user;
- said web path include also a third flat path section placed downstream from the first flat path section, said third flat path section being vertical and facing the inspection passage, being said third flat path section visible from the inspection passage.

According the above, in addition to the maintenance passage placed under the web material entrance, an inspection passage accessible for a user is placed under the web material exit. A third flat path section also vertical faces said inspection passage, in such a way that said user placed on said inspection passage can observe the treated web material for inspection. Preferably a window protected with a glass or similar is interposed between the inspection passage and the third flat path section for security and hygienic reasons.

In an additional embodiment it is proposed that between the first flat path section and the third flat path section a light emitting device is provided facing the inspection passage, being the light emitted visible from said inspection passage. Preferably said light emitting device being a stroboscopic light. This light emitting device helps in the treated web material inspection, and specially the stroboscopic light helps to inspect the continuous transported web material coordinating the frequency of said light with the velocity of the transported web material.

According to an additional or alternative proposed feature said laser generators, and said first flat path are enclosed in a housing, being said housing connected with an air suction device to extract the smoke produced by the web material laser treatment. Alternatively said housing include also the third flat path section.

In a different embodiment the laser generators and the first flat path section are blocked and inaccessible from the maintenance passage, during non-maintenance periods, by a maintenance doors, preferably maintenance sliding doors, for a safety and hygienic reasons. As can be understood the non-maintenance periods are those periods in which no maintenance or adjust operations have to be performed, specially operations related with the laser generators, for example being the laser treatment module under operation conditions. This feature allows the presence of a user into the maintenance passage during the laser treatment module operation assuring the user safety and avoiding the web material contamination by said user, and therefore making not necessary the installation of a protection fence surrounding the laser treatment module.

Each laser generator include an optical resonator chamber, said resonator chamber having an exit window through which the laser beam is emitted from said resonator chamber, and said optical resonation chamber being defined, for example, between two waveguiding electrodes facing each other and two resonation mirrors facing each other. As an optional feature it is proposed that said exit window is placed on an upper position of the resonator chamber being the laser generator supported on the corresponding supporting bridge. Also is proposed that the laser generators are supported on the corresponding supporting bridge in such a position that the laser beam emitted from said resonator chamber is emitted in a horizontal or ascending direction.

These features regarding the laser generator position provides a further improvement, thus if the laser generator is positioned with the exit window in the lower part, or with the laser beam being emitted in descending direction, small particles or contaminants contained into the resonation chamber can be deposited in the optical element of the exit window, producing a reduction of the laser generator efficiency or precision, or producing an overheating of this element.

It will be understood that references to geometric position, such as vertical, horizontal, parallel, perpendicular, tangent, etc. allowed deviations up to ± 5 ° from the theoretical position defined by the nomenclature.

Other features of the invention are disclosed in the following detailed description of an exemplary embodiment.

### Brief description of the drawings

The foregoing and other advantages and features will be more fully understood from the following detailed description of an embodiment with reference to the accompanying drawings, which should be taken as illustrative and not limiting, in which:
Fig. 1 shows a schematic section view of a plant including an unwinder module, a laser treatment module, and a rewinder module, said three modules connected by a web path and spaced to each other by a maintenance passage and by an inspection passage, being the laser treatment module provided with a first and a second group of laser generators accessible from the maintenance passage;

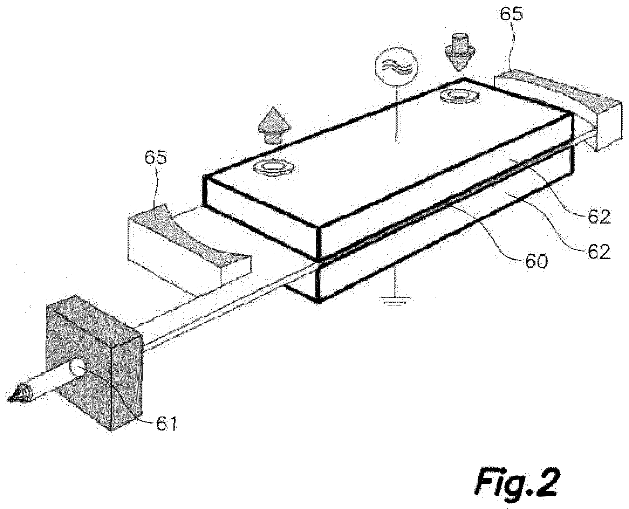

Fig. 2 shows schematic perspective view of a laser generator which includes an optical resonation chamber and an exit window of said resonation chamber.

### Detailed description of preferred embodiments

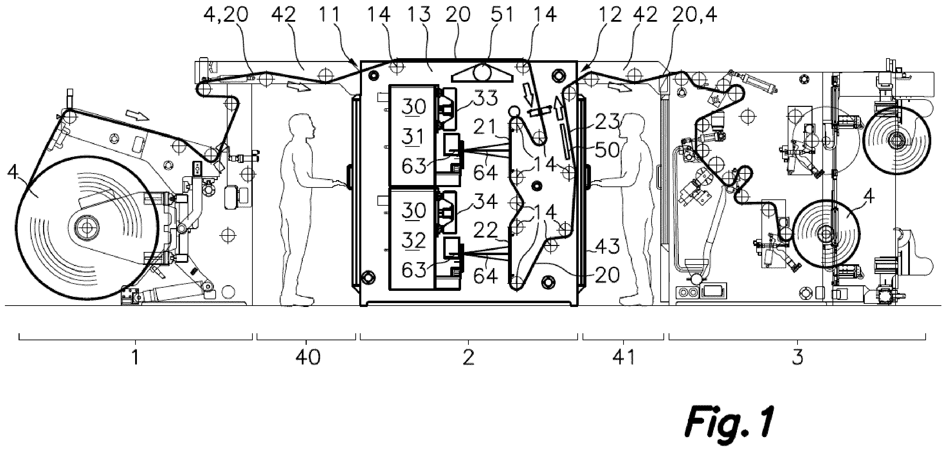

Figure 1 shows an embodiment with an illustrative and non-limitative character.

In this embodiment three web treatment modules are shown connected through a shared web path 20 of a web material 4 transported in a given direction.

The central module is a continuous web laser treatment module 2. The preceding module 1, in the web material transport direction, is an unwinder unit which unrolls said web material 4, for example a PVC sheet, feeding said web path 20.

In this example the posterior module 3 emplaced downstream in the web material transport direction after the laser treatment module 2 is a rewinder unit, which rolls the web material 4 after the laser treatment performance in the laser treatment module 2, and the web material 4 is continuously transported from the precedent module 1 to the posterior module 3 through the laser treatment module 2.

As will be obvious for an expert, the modules emplaced upstream and downstream in the web material transport direction regarding the laser treatment module 2 can be different modules than those described having different functions.

Said preceding module 1 feed the web material 4 to a web material entrance 11 of the laser treatment module 2, which is spaced a distance from the preceding module 1 and being said web material entrance 11 placed at a certain distance from the floor, at least at 1,6 meters. The elevated position of the web material entrance 11 and the distance between the preceding module 1 and the laser treatment module 2 define a maintenance passage 40, which is accessible for a user and which is covered for the web material path section which feeds the laser treatment module 2.

Said posterior module 3 is fed with web material 4 from the web material exit 12 of the laser treatment module 2, which is spaced a distance from the posterior module 3 defining a inspection passage 41.

Said web material exit 12 is placed at a certain distance from the floor, at least at 1,6 meters. The elevated position of the web material exit 12 and the distance between the laser treatment module 2 and the posterior module 3 define said inspection passage 41, which is accessible for a user and which is covered for the web material path section which is fed from the laser treatment module 2 to the posterior module 3.

Said laser treatment module 2 include a frame 13 supported on a floor and a plurality of rewinder rollers 14 supported on said frame, said rollers 14 defining a web path 20 across the laser treatment module 2.

Said web path 20 of the laser treatment module 2 includes a first flat path section 21, a second flat path section 22 and a third flat path section 23, being said three flat path sections 21, 22, 23 oriented in vertical position. Alternative positions with a deviation of ±15º over the vertical positions are also possible.

First and second flat path sections 21 and 22 are successive parts of a descendent section of the web path 20, and are both facing the maintenance passage 40. Between said maintenance passage 40 and the first and second flat path sections 21 and 22 a first group of laser generators 31 and a second group of laser generators 32 are positioned.

Each laser generator 30 of the first group of laser generators 31 is slidably arranged and supported on a first support bridge 33 supported on the frame 13, and each laser generator 30 of the second group of laser generators 32 is slidably arranged and supported on a second support bridge 34 supported on the frame 13.

Each laser generator 30 of the first and second group of laser generators 31 and 32 include an optical resonation chamber 60 defined between two waveguiding electrodes 62 facing each other and two resonator mirrors 65 facing each other, said optical resonation chamber 60 being vertically oriented with an exit window 61 placed on the top part of said optical resonation chamber 60, projecting a laser beam in vertical and ascending direction. Said emitted laser beam is then corrected and reoriented by means of optical elements such mirrors and lens, to redirect said laser beam in a direction incident on the web material 4, prefereably perpendicular to the corresponding first and second flat path sections 21 and 22, in order to produce the web material 4 laser treatment on said first and second flat path sections 21 and 22.

Said laser generators include also a galvanometric mirror or lent 63 which can be automatically oriented changing the direction of the laser beam incident on the web material 4 providing an orientable laser beam 64. This galvanometric mirror or lent 63 is controlled through a programmable logic controller which is programmed with the patterns to be created by the laser treatment on the web material 4.

Said laser treatment can include burning, cutting, micro-perforating, welding, printing, etc. All those laser treatments produce smoke, usually toxic smoke, therefore and for security reasons the interior of the laser treatment module 2 is un-accessible from the maintenance passage 40, being the access blocked by maintenance sliding doors 42, which include a glass for inspection of the process. From the maintenance passage 40, and only after opening said maintenance sliding doors 42, the laser generators 30 can be manipulated or adjusted. Preferably a sensor detects the opening of said maintenance sliding doors 42 and stops the web material transportation and the laser treatment for security reasons.

Said maintenance sliding doors 42, the frame 13 of the laser treatment module 2 and also the web path 20 determine a housing surrounding the laser treatment sections where the smoke is created. Said housing is connected to an air suction device 51 which suctions the smoke out of the installation.

Downstream of the first and second flat path sections 21 and 22 in the web material transport direction, the web path 20 change its direction to an ascendant direction including said third flat path section 23 on said ascendant segment of the web path 20.

Said third flat path section 23 faces the inspection passage 41, being said third flat path section 23 visible from the inspection passage 41 through an inspection window 43.

A stroboscopic light emitting device 50 is placed parallel to the third flat path section 23 emitting light through the third flat path section 23 of the web material 4 and through the inspection window 43, being the light blinking frequency coordinated with the velocity of the web material transport in order to make visible, for an observer placed on the inspection passage 41, the laser treatment produced on the web material 4 despite the high velocity of the transport of the web material 4.

## Claims

1. Continuous web laser treatment module (2) comprising:
• a web material (4) transported along a web path (20) in a given direction;
• a web material entrance (11) to the laser treatment module (10);
• a web material exit (12) of the laser treatment module (10) placed downstream from the web material entrance (11);
• a frame (13) supported on a floor;
• a plurality of rotating rollers (14), supported on said frame (13), said rollers (14) defining said web path between the web material entrance (11) and the web material exit (12), said web path including at least a first flat path section (21) for the web material laser treatment;
• a first group of laser generators (31) positionally adjustable arranged and supported on a first support bridge (33) integrated on said frame (13);
each laser generator of the first group of laser generators (31) creating a laser beam, and being provided with an automatic galvanometric mirror or lent (63) which deflect said laser beam providing an orientable laser beam (64) incident on said first flat path section (21) of the web material (4);
**characterized in that**
• said web material entrance (11) and/or said web material exit (12) are placed over a maintenance passage (40) accessible for a user;
• said first flat path section (21) is oriented in vertical direction, facing said maintenance passage (40), being said laser generators (30) accessible from said maintenance passage (40).

2. Module according to claim 1 **characterized in that** include a second group of laser generators (32) positionally adjustable arranged and supported on a second support bridge (34) integrated on said frame and parallel to said first support bridge (33), being the second group of laser generators (32) placed downstream from the first group of laser generators (31), and each laser generator (30) of the second group of laser generators (32) creating a laser beam, and being provided with an automatic galvanometric mirror or lent (63) which deflect said laser beam providing an orientable laser beam (64) incident on a second flat path section (22) of the web material (4).

3. Module according to claim 1 or 2 **characterized in that**
• said web material entrance (11) is placed over the maintenance passage (40);
• said web material exit (12) is placed over an inspection passage (41) accessible for an user;
• said web path (20) include also a third flat path section (23) placed downstream from the laser treatment flat path section (21, 22), said third flat path section (23) being vertical and facing the inspection passage (41), being said third flat path section (23) visible from the inspection passage (41).

4. Module according to claim 3 **characterized in that** a light emitting device (50) is provided facing the third flat path section (23), being the light emitted visible from said inspection passage through the third flat path section (23).

5. Module according to claim 4 **characterized in that** said light emitting device (50) is a stroboscopic light.

6. Module according to claim 1, 2, 3, 4 or 5 **characterized in that** at least said laser generators (30), and said first flat path are enclosed in a housing, being said housing connected with an air suction device (51).

7. Module according to any preceding claim **characterized in that** the laser generators (30) and the laser treatment flat path section (21, 22) are blocked and inaccessible from the maintenance passage (40), during non-maintenance periods, by a maintenance doors (42), preferably maintenance sliding doors.

8. Module according to any preceding claim **characterized in that** each laser generator (30) include an optical resonator chamber (60), said resonator chamber (60) having an exit window (61) through which the laser beam is emitted from said resonator chamber (60), said exit window (61) being placed on an upper position of the resonator chamber (60).

9. Module according to any preceding claim **characterized in that** each laser generator (30) include an optical resonator chamber (60), said resonator chamber (60) having an exit window (61) through which a laser beam is emitted from said resonator chamber (60) in an horizontal or ascending direction.

10. Module according to any preceding claim 1 to 9 **characterized in that** a web transport bridge (42), which guides the web material to the laser treatment module (2) web material entrance (11), is placed over the maintenance passage (40).

11. Module according to any preceding claim 3 to 10 **characterized in that** a web transport bridge (42), which guides the web material from the laser treatment module (2) web material exit (12), is placed over the inspection passage (40).

## Patentansprüche

1. Endlosbahnlaserbehandlungsmodul (2) umfassend:
• ein Bahnmaterial (4), welches entlang eines Bahnwegs (20) in einer gegebenen Richtung befördert wird;
• einen Bahnmaterialeingang (11) zum Laserbehandlungsmodul (10);
• einen Bahnmaterialausgang (12) des Laserbehandlungsmoduls (10), welches stromabwärts des Bahnmaterialeingangs (11) platziert ist;
• einen Rahmen (13), welcher auf dem Boden gestützt ist;
• eine Vielzahl von drehenden Rollen (14), welche auf dem genannten Rahmen (13) gestützt sind, wobei die genannten Rollen (14) den genannten Bahnweg zwischen dem Bahnmaterialeingang (11) und dem Bahnmaterialausgang (12) definieren, wobei der genannte Bahnweg mindestens einen ersten flachen Wegabschnitt (21) für die Laserbehandlung des Bahnmaterials beinhaltet;
• eine erste Gruppe von Lasergeneratoren (31), welche auf einer ersten, im genannten Rahmen (13) integrierten Abstützbrücke (33) lagemäßig einstellbar angeordnet und gestützt sind;
wobei jeder Lasergenerator der ersten Gruppe von Lasergeneratoren (31) einen Laserstrahl erzeugt, und mit einem automatischen galvanometrischen Spiegel oder Linse (63) versehen ist, welcher/welche den genannten Laserstrahl umlenkt, unter Bereitstellung eines orientierbaren Laserstrahls (64), welcher auf dem genannten ersten flachen Wegabschnitt (21) des Bahnmaterials (4) auftrifft;
**dadurch gekennzeichnet, dass**
• der genannte Bahnmaterialeingang (11) und/oder der genannte Bahnmaterialausgang (12) über einem Wartungsdurchgang (40) platziert sind, welcher für einen Benutzer zugänglich ist;
• der genannte erste flache Wegabschnitt (21) in vertikaler Richtung orientiert ist, dem genannten Wartungsdurchgang (40) zugewandt, wobei die genannten Lasergeneratoren (30) vom genannten Wartungsdurchgang (40) aus zugänglich sind.

2. Modul nach Anspruch 1, **dadurch gekennzeichnet, dass** es eine zweite Gruppe von Lasergeneratoren (32) beinhaltet, welche auf einer zweiten, im genannten Rahmen integrierten Abstützbrücke (34) und parallel zur genannten ersten Abstützbrücke (33) lagemäßig einstellbar angeordnet und gestützt sind, wobei die zweite Gruppe von Lasergeneratoren (32) stromabwärts der ersten Gruppe von Lasergeneratoren (31) platziert ist, und wobei jeder Lasergenerator (30) der zweiten Gruppe von Lasergeneratoren (32) einen Laserstrahl erzeugt, und mit einem automatischen galvanometrischen Spiegel oder Linse (63) versehen ist, welcher/welche den genannten Laserstrahl umlenkt, unter Bereitstellung eines orientierbaren Laserstrahls (64), welcher auf einem zweiten flachen Wegabschnitt (22) des Bahnmaterials (4) auftrifft.

3. Modul nach Anspruch 1 oder 2, **dadurch gekennzeichnet, dass**
• der genannte Bahnmaterialeingang (11) über dem Wartungsdurchgang (40) platziert ist;
• der genannte Bahnmaterialausgang (12) über einem Prüfdurchgang (41) platziert ist, welcher für einen Benutzer zugänglich ist;
• der genannte Bahnweg (20) auch einen dritten flachen Wegabschnitt (23) beinhaltet, welcher stromabwärts des flachen Wegabschnitts (21, 22) für die Laserbehandlung platziert ist, wobei der genannte dritte flache Wegabschnitt (23) vertikal und dem Prüfdurchgang (41) zugewandt ist, wobei der genannte dritte flache Wegabschnitt (23) vom Prüfdurchgang (41) aus sichtbar ist.

4. Modul nach Anspruch 3, **dadurch gekennzeichnet, dass** eine lichtemittierende Vorrichtung (50) dem dritten flachen Wegabschnitt (23) zugewandt vorgesehen ist, wobei das emittierte Licht vom genannten Prüfdurchgang aus über den dritten flachen Wegabschnitt (23) sichtbar ist.

5. Modul nach Anspruch 4, **dadurch gekennzeichnet, dass** die genannte lichtemittierende Vorrichtung (50) eine Stroboskoplampe ist.

6. Modul nach Anspruch 1, 2, 3, 4 oder 5, **dadurch gekennzeichnet, dass** mindestens die genannten Lasergeneratoren (30) und der genannte erste flache Weg in einem Gehäuse umschlossen sind, wobei das genannte Gehäuse mit einer Luftansaugvorrichtung (51) verbunden ist.

7. Modul nach einem der vorhergehenden Ansprüche, **dadurch gekennzeichnet, dass** die Lasergeneratoren (30) und der flache Wegabschnitt (21, 22) für die Laserbehandlung blockiert sind und vom Wartungsdurchgang (40) aus während Zeiträumen ohne Wartung nicht zugänglich sind, mittels Wartungstüren (42), vorzugsweise Wartungsschiebtüren.

8. Modul nach einem der vorhergehenden Ansprüche, **dadurch gekennzeichnet, dass** jeder Lasergenerator (30) eine optische Resonatorkammer (60) beinhaltet, wobei die genannte Resonatorkammer (60) ein Ausgangsfenster (61) aufweist, durch welches der Laserstrahl von der genannten Resonatorkammer (60) aus emittiert wird, wobei das genannte Ausgangsfenster (61) in einer oberen Lage der Resonatorkammer (60) platziert ist.

9. Modul nach einem der vorhergehenden Ansprüche, **dadurch gekennzeichnet, dass** jeder Lasergenerator (30) eine optische Resonatorkammer (60) beinhaltet, wobei die genannte Resonatorkammer (60) ein Ausgangsfenster (61) aufweist, durch welches ein Laserstrahl von der genannten Resonatorkammer (60) aus in einer horizontalen oder steigenden Richtung emittiert wird.

10. Modul nach einem der vorhergehenden Ansprüche 1 bis 9, **dadurch gekennzeichnet, dass** eine Bahnbeförderungsbrücke (42), welche das Bahnmaterial zum Bahnmaterialeingang (11) des Laserbehandlungsmoduls (2) führt, über dem Wartungsdurchgang (40) platziert ist.

11. Modul nach einem der vorhergehenden Ansprüche 3 bis 10, **dadurch gekennzeichnet, dass** eine Bahnbeförderungsbrücke (42), welche das Bahnmaterial vom Bahnmaterialausgang (12) des Laserbehandlungsmoduls (2) aus führt, über dem Prüfdurchgang (40) platziert ist.

## Revendications

1. Module (2) de traitement au laser d'une bande continue comportant :
• un matériau en bande (4) transporté le long d'une trajectoire de bande (20) dans un certain sens ;
• une entrée (11) de matériau en bande au module (10) de traitement au laser ;
• une sortie (12) de matériau en bande du module (10) de traitement au laser située en aval de l'entrée (11) du matériau en bande ;
• un châssis (13) supporté sur un sol ;
• une pluralité de rouleaux rotatifs (14) supportés sur ce châssis (13), ces rouleaux (14) définissant cette trajectoire de matériau entre l'entrée (11) de matériau en bande et la sortie (12) de matériau en bande, cette trajectoire de la bande comprenant au moins une première section (21) de trajectoire plate pour le traitement au laser du matériau en bande ;
• un premier groupe de générateurs de laser (31) à position réglable aménagés et supportés sur un premier pont (33) de support intégré sur ce châssis (13) ;
chaque générateur de laser du premier groupe de générateurs de laser (31) créant un faisceau laser et étant pourvu d'un miroir galvanométrique automatique ou lentille (63) qui dévie ce faisceau laser en offrant un faisceau laser (64) orientable qui tombe sur cette première section (21) de la trajectoire plate du matériau en bande (4) ;
**caractérisé en ce que**
• cette entrée de matériau en bande (11) et/ou cette sortie de matériau en bande (12) sont situées sur un passage d'entretien (40) accessible à l'utilisateur ;
• cette première section (21) plate de trajectoire est orientée verticalement, faisant face à ce passage d'entretien (40), ces générateurs (30) de laser étant accessibles depuis ce passage d'entretien (40).

2. Module conformément à la revendication 1, **caractérisé en ce qu'**il comprend un deuxième groupe de générateurs (32) de laser à position réglable aménagés et supportés sur un deuxième pont de support (34) intégré sur ce châssis et parallèle à ce premier pont de support (33), le second groupe de générateurs de laser (32) étant placé en aval du premier groupe de générateurs de laser (31), et chaque générateur de laser (30) du deuxième groupe de générateurs de laser (32) créant un faisceau laser et étant pourvu d'un miroir galvanométrique automatique ou lentille (63) qui dévie ce faisceau laser en offrant un faisceau laser (64) orientable tombant sur une deuxième section (22) de trajectoire plate du matériau en bande (4).

3. Module conformément à la revendication 1 ou 2 **caractérisé en ce que**
• cette entrée (11) de matériau en bande est placée au-dessus du passage d'entretien (40) ;
• cette sortie (12) de matériau en bande est placée au-dessus d'un passage d'inspection (41) accessible à un utilisateur ;
• cette trajectoire (20) de la bande comprend également une troisième section (23) de trajectoire plate placée en aval de la section (21, 22) de trajectoire plate de traitement au laser, cette troisième section (23) de trajectoire plate étant verticale et faisant face au passage d'inspection (41), cette troisième section (23) de trajectoire plate étant visible depuis le passage d'inspection (41).

4. Module conformément à la revendication 3 **caractérisé en ce qu'**un dispositif (50) émetteur de lumière est prévu faisant face à la troisième section (23) de trajectoire plate, la lumière émise étant visible depuis ce passage d'inspection à travers la troisième section (23) de trajectoire plate.

5. Module conformément à la revendication 4 **caractérisé en ce que** ce dispositif émetteur de lumière (50) est une lumière stroboscopique.

6. Module conformément à la revendication1, 2, 3, 4 ou 5 **caractérisé en ce qu'**au moins ces générateurs de laser (30) et cette première trajectoire plate sont enfermée dans un boîtier, ce boîtier étant relié à un dispositif d'aspiration d'air (51).

7. Module conformément à une quelconque des revendications précédentes **caractérisé en ce que** les générateurs de laser (30) et la section (21,22) de trajectoire plate de traitement au laser sont bloqués et inaccessibles depuis le passage d'entretien (40) durant les périodes où il n'y a pas d'entretien, par des portes d'entretien (42) de préférence des portes d'entretien coulissantes.

8. Module conformément à une quelconque des revendications précédentes **caractérisé en ce que** chaque générateur de laser (30) comprend une chambre résonatrice optique (60), cette chambre résonatrice (60) ayant une fenêtre de sortie (61) à travers laquelle le faisceau laser est émis depuis cette chambre résonatrice (60), cette fenêtre de sortie (61) étant placée dans une position supérieure de la chambre résonatrice (60).

9. Module conformément à une quelconque des revendications précédentes **caractérisé en ce que** chaque générateur de laser (30) comprend une chambre résonatrice optique (60), cette chambre résonatrice optique (60) ayant une fenêtre de sortie (61) à travers laquelle un faisceau laser est émis depuis cette chambre résonatrice (60), en sens horizontal ou ascendant.

10. Module conformément à une quelconque des revendications précédentes 1 à 9, **caractérisé en ce qu'**un pont (42) de transport de bande, qui guide le matériau en bande au module (2) de traitement au laser, l'entrée de matériau en bande (11) est placé au-dessus du passage d'entretien (40).

11. Module conformément à une quelconque des revendications précédentes 3 à 10 **caractérisé en ce qu'**un pont de transport de bande (42) qui guide le matériau en bande depuis le module (2) de traitement au laser, la sortie (12) de matériau en bande est située au-dessus du passage d'inspection (40).
